# EUROPÄISCHE PATENTSCHRIFT

(11) **EP 0 963 783 B1**
(45) Veröffentlichungstag und Bekanntmachung des Hinweises auf die Patenterteilung: **19.04.2006**
(21) Anmeldenummer: 99110719.4
(22) Anmeldetag: 04.06.1999
(51) Int. Cl.: B01D 63/10, B01D 63/12, B01D 63/06, B01D 69/04, B01D 61/02, B01D 61/14

(54) **Membranelement und Verfahren zu seiner Herstellung**
Membrane element and process for its manufacture
Element de membrane et procédé pour sa production

(30) Priorität: 12.06.1998 DE 19826161
(43) Veröffentlichungstag der Anmeldung: 15.12.1999
(73) Patentinhaber: Celgard GmbH, 65203 Wiesbaden (DE)
(72) Erfinder: Meyer-Blumenroth, Ulrich Dr., 65510 Idstein (DE); Noll, Klaus, 65520 Bad Camberg (DE); Bücher, Klaus, 65201 Wiesbaden (DE); Reus, Todd, 65227 Niedernhausen (DE)
(74) Vertreter: Schweitzer, Klaus

(56) Entgegenhaltungen:
- EP-A- 0 347 174
- WO-A-95/05889
- DE-A- 4 403 652
- DE-U- 29 620 190

## Beschreibung

Die Erfindung betrifft neue Membranelemente, ein Verfahren zu ihrer Herstellung sowie ihre Verwendung als Filter oder Trenneinheit, beispielsweise für die Ultrafiltration, Nanofiltration, Umkehrosmose, Gastrennung oder Pervaporation.

Unter Membranelementen werden Vorrichtungen verstanden, in denen die meist mechanisch recht empfindlichen Membranen - welche die eigentliche trennende/rückhaltende Funktion ausüben - so angeordnet sind, daß sie den oftmals rauhen Betriebsbedingungen standhalten.

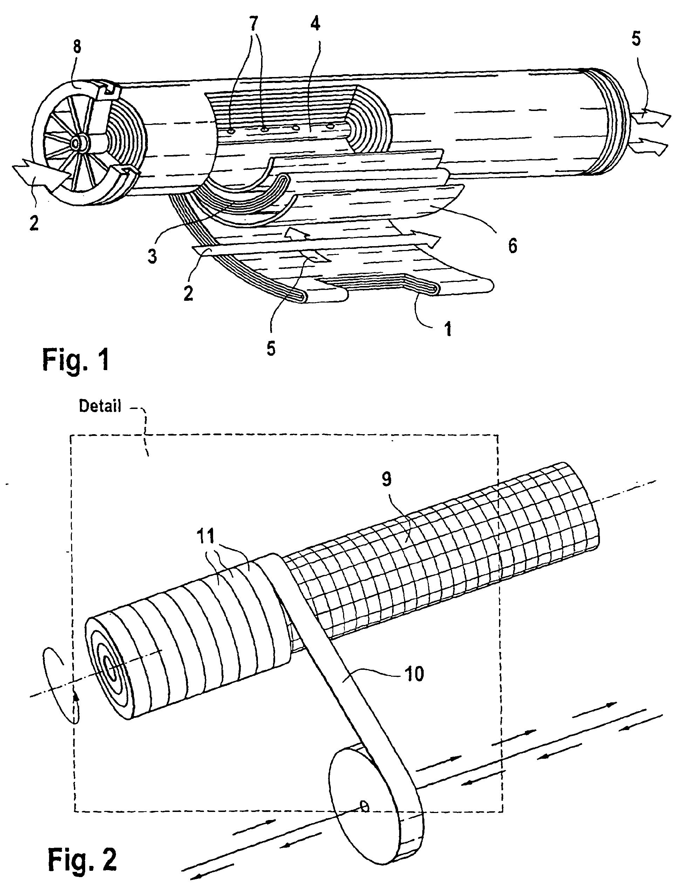

Membranelemente gibt es in unterschiedlichen Bauformen. Weitverbreitet sind die sogenannten Spiralwickelelemente (vergl. WO-A-95 05889). Sie bestehen aus einer oder mehreren doppelten Membranlagen 1, deren aktive Trennschichten außen liegen. Diese Doppellagen sind jeweils an drei Seiten miteinander verklebt oder verschweißt und bilden sogenannte Membrantaschen. Die offene Seite ist mit dem Permeatrohr 4, das im Bereich der Membranlagen perforiert oder mit Bohrungen 7 versehen ist, verklebt. Die Innenseiten der Membrantaschen kommunizieren jetzt nur noch mit dem Permeatrohr 4. Die Membrantaschen sind um das Permeatrohr gewickelt. Ein Zulauf 2 tritt an der Stirnseite in das Element ein und durchströmt es axial zwischen den Membrantaschen. Ein geeigneter Abstandshalter (Spacer) 6 sorgt für eine gute Überströmung und optimale Durchmischung des Zulaufstromes an der Membranoberfläche. Infolge eines Druckunterschiedes tritt von beiden Seiten Permeat 5 in die Membrantaschen. Eine Drainageschicht, bestehend aus einem speziellen Abstandshalter 3 (Permeatspacer), sorgt für einen guten Abfluß zum Permeatrohr, wo es durch dessen Bohrungen 7 abfließen kann (s. Abb.1).

Als semipermeable Membranen können je nach Einsatzzweck Mikro-, Ultra- oder Nanofiltrationsmembranen sowie Umkehrosmose-, Gastrenn- oder Pervaporationsmembranen verarbeitet werden.

Solche Elemente finden Anwendung bei der Aufarbeitung von Abwässern, in der Lebensmittelindustrie, in der pharmazeutischen Industrie, bei der Herstellung von Trinkwasser, bei der Trennung von Gasgemischen usw.. Eine Beschreibung für einen typischen Elementaufbau findet man bei Larson, R.E. e.a. "Test results on FT-30 eight-inch-diameter seawater and brackish water reverse osmosis element", Desalination 46 (1983) S.81/90. Eine andere Bauform sind sogenannte "pleated elements", bei denen die Membranen in Falten gelegt und ebenfalls um ein Permeatsammelrohr angeordnet sind. Elemente nach diesem Bauprinzip sind unter anderem kommerziell erhältlich bei der Firma Daicen, Japan. Beispiele: MOLSEP PV04-GN-DUY-L000 oder MOLSEP PV08-W-DUY-L000

Im Betrieb sind solche Elemente meistens in Gehäuse eingebaut, auch Druckrohre genannt. Die Membranelemente in den Druckrohren werden bei der Cross Flow Filtration häufig mit sehr großen Fluidmengen überströmt. Um die Elemente im Betrieb gegen Deformationen zu schützen sind sie im allgemeinen an den Enden mit sogenannten Anti-Telescoping-Devices (ATD) 8 versehen und mit geeigneten Hüllen umgeben, die ihre Stabilität erhöhen. Die ATDs können mit den Membranelementen fest verbunden, an den Enden aufgesteckt oder im Druckrohr angebracht sein. Die Hüllen bestehen oft aus dem Material, das auch als Abstandshalter (Spacer) im Membranelement eingesetzt ist, beispielsweise aus extrudierten Polypropylenkörben, aus Umwicklungen mit Klebeband (aus PVC, Polypropylen oder Polyester)oder harten Schalen aus glasfaserverstärktem Kunststoff (GFK). Unter extremen Betriebsbedingungen können diese Umhüllungen jedoch häufig nicht mehr ihre Aufgaben erfüllen, werden beschädigt oder verformen sich. So sind die meisten Hüllen, hergestellt aus Klebebändern, bei Temperaturen über 50° C nicht mehr stabil. Auch extrudierte Polypropylenkörbe sind bei höheren Temperaturen nur noch sehr eingeschränkt formstabil. Membranelemente mit harten Schalen aus GFK können beim Kontakt mit Säuren oder Laugen in höherer Konzentration oder durch Lösemittelanteile im Zulaufstrom angegriffen werden. Das kann sich unter anderem in nachlassender Festigkeit oder im Abplatzen von Flocken aus der Oberfläche bemerkbar machen. Auch bei geringen Überströmungen im Betrieb (bei manchen Anlagen wird im sogenannten Dead-End-Betrieb ohne Überströmung gearbeitet) können Betriebszustände auftreten, die die Membranelemente belasten, z.B. bei der Spülung/Reinigung oder durch unerwünschte Betriebszustände (starke Veränderung des Zulaufstromes, hohe Temperaturen, Druckstöße, allgemeine Bedienungsfehler, usw.).

Auch für den Einsatz von Membranelementen in der Gastrennung und der Pervaporation ist es für den zuverlässigen Betrieb unerlässlich, Deformationen zu vermeiden. Agressive Komponenten im Zulaufstrom können die Integrität der Membranelemente hier ebenso beeinträchtigen, wie extreme bzw. unerwünschte Betriebsbedingungen (Starke Veränderung des Zulaufstromes, hohe Temperaturen, Druckstöße, allgemeine Bedienungsfehler, usw.)

Aufgabe der vorliegenden Erfindung war es nun, Membranelemente zur Verfügung zu stellen, die die oben beschriebenen Nachteile nicht mehr aufweisen, die insbesondere Umhüllungen aufweisen, die stabiler sind, als solche gemäß Stand der Technik. Idealerweise sollen die Membranelemente die Kombination folgender Eigenschaften besitzen:
- sicherer Betrieb im Kontakt mit höher konzentrierten Säuren und Laugen auch in Verbindung mit hohen Temperaturen (bis 100°C)
- keine Ablösung von Teilen der Umhüllung bei Kontakt mit Lösemitteln
- sehr hohe mechanische Stabilität, die vergleichbar ist mit der von harten Schalen aus GFK ohne jedoch deren Nachteil aufzuweisen
- Umhüllung aus einem Werkstoff, der auch schon im eigentlichen Membranelement eingesetzt wird.

Diese Aufgabe wird gelöst durch ein Membranelement, enthaltend einen Kern und eine Umhüllung, die den Kern umschließt, wobei die Umhüllung aus sich zumindest teilweise überlappenden Polymerfolien gebildet wird, die im Überlappungsbereich miteinander verschweißt sind.

Weiterhin wird die Aufgabe gelöst durch ein Verfahren zur Herstellung von Membranelementen bei dem ein Membrankern mit einer Umhüllung versehen wird, in dem eine funktionalisierte Polymerfolie um den Membrankern gewickelt wird, wobei sich einzelne Lagen der Polymerfolie zumindest in Teilbereichen überlappen und die Polymerfolie zumindest in diesen Teilbereichen durch Energiezufuhr miteinander verschweißt wird.

Die erfindungsgemäßen Membranelemente weisen die Nachteile der konventionellen Hüllen nicht mehr auf. Durch die Wahl einer geeigneten Polymerfolie für die Umhüllung kann ein sicherer Betrieb im Kontakt mit höher konzentrierten Säuren und Laugen auch in Verbindung mit hohen Temperaturen (bis 100°C) erreicht werden. Ebenso sind Ablösungen von Teilen der Umhüllung bei Kontakt mit Lösemitteln kaum mehr möglich. Die nach den im folgenden beschriebenen Verfahren hergestellten Umhüllungen weisen eine sehr hohe mechanische Stabilität auf, die vergleichbar ist mit der von harten Schalen aus GFK ohne jedoch deren Nachteil aufzuweisen. In den meisten Fällen ist es möglich die Umhüllung aus einem Werkstoff herzustellen, der auch schon im eigentlichen Membranelement verwendet wird.

Die Polymerfolienbahn für die Umhüllung besteht aus einer oder mehreren Lagen einer Polymerfolie mit mindestens einer funktionalisierten Oberfläche. Mehrlagige Polymerfolien können aus gleich- oder verschiedenartigen Folien aufgebaut sein.

Als Polymerfolie eignen sich für den hier beschriebenen Einsatzzweck besonders Folien aus Polypropylen (gefüllt, ungefüllt, mit Mikrovoids oder gefüllt und mit Mikrovoids). Folien auf der Basis von Polyester, insbesondere Polyethylenterephthalat (gefüllt, ungefüllt, mit Mikrovoids oder gefüllt und mit Mikrovoids) sind ebenfalls geeignet. Ebenfalls geeignet, wenn auch wegen geringerer chemischer / thermischer Stabilität, sind Folien aus PVC.

Unter "funktionalisiert" im erfindungsgemäßen Sinne wird verstanden, daß die Folien derart beschaffen sind, daß sie unter Energiezufuhr miteinander verschweißen können, wobei "verschweißen" bedeutet, daß sich die Materialien der beiden in Kontakt gebrachten und einer Energiezufuhr ausgesetzten Folien im Kontaktbereich nahezu ohne erkennbare Phasengrenze miteinander vermischen, wobei dieses Vermischen erst bei erhöhten Temperaturen - d.h. oberhalb ca. 70 °C, bevorzugt oberhalb ca. 100 °C - einsetzt. Dies kann beispielsweise durch Aufbringen einer Siegelschicht auf mindestens einer Oberfläche erfolgen, wobei die Siegelschicht eine niedrigere Schmelztemperatur als die Basisfolie aufweist. Bei Polypropylenfolien kann dies beispielsweise eine C₂/C₃-, C₂/C₄-, C₃/C₄- und/oder C₂/C₃/C₄-Copolymerdeckschicht sein. Generell ist jede (thermoplastische) Folie einsetzbar, die durch ein geeignetes Verfahren, z:B. Coextrusion, mit mindestens einer funktionalisierten Oberfläche (z.B. Siegelschicht mit niedrigerem Schmelzpunkt als Basisfolie) versehen wird.

Des Kern des Membranelements kann in unterschiedlichen Bauformen hergestellt werden. Erfindungsgemäß bevorzugt sind die sogenannten Spiralwickelelemente. Sie bestehen aus einer oder mehreren doppelten Membranlagen deren aktive Trennschichten außen liegen. Diese Doppellagen werden jeweils an drei Seiten miteinander verklebt oder verschweißt und bilden sogenannte Membrantaschen. Die offene Seite wird mit dem Permeatrohr, das im Bereich der Membranlagen perforiert oder mit Bohrungen versehen ist, verklebt. Die Membrantaschen werden dann um das Permeatrohr gewickelt. Zweckmäßigerweise rollt man die Membrantaschen zusammen mit einem Abstandshalter (Spacer), beispielsweise einem flächigen Polypropylennetz, um das Permeatrohr. Die Stirnseiten der erhaltenen Rollen werden dann mit 'Anti-Telescoping-Devices' versehen, welche ein Teleskopieren der aufgerollten Membranelemente verhindern.

Zur Aufbringung der erfindungsgemäßen Umhüllung auf den Kern gibt es mehrere Möglichkeiten. Das zylinderförmige Membranelement 9 wird mit einer Polymerfolienbahn 10, welche mindestens eine funktionalisierte Oberfläche aufweist, schraubenförmig umwickelt (s. Abb.2).

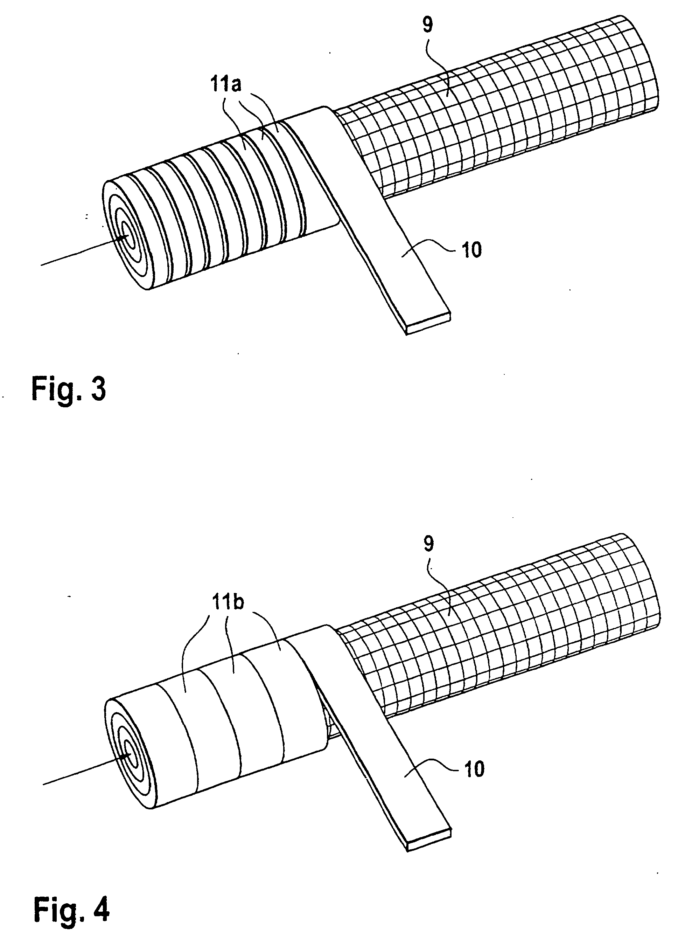

Die einzelnen Windungen 11a können sich dabei ganz oder teilweise überlappen (Abb.3), bündig nebeneinander liegen 11 b (Abb.4) oder mit Abstand aufgebracht werden 11 c (Abb.5). Diese Windungen werden zweckmäßigerweise in mehreren Lagen aufgebracht; je nach Grad der Überlappung und Dicke der Polymerfolienbahn zwischen 1 und 400 Lagen. Die Dicke der Umhüllung beträgt zwischen 0,3mm und 28mm.

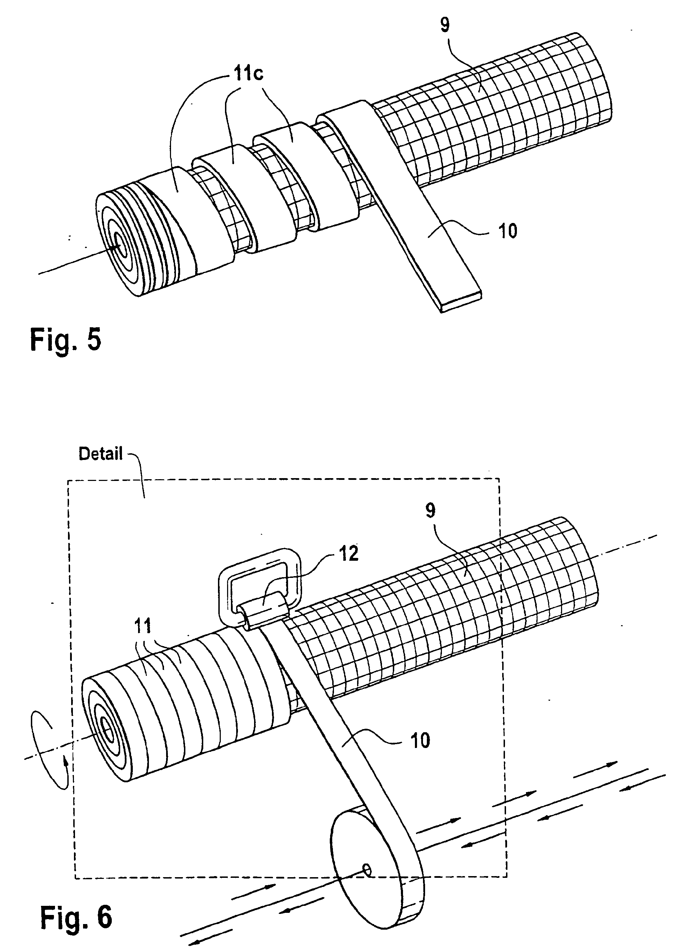

Beim Aufbringen der Windungen ist das Einschließen von Luft zwischen den einzelnen Lagen zu vermeiden. Dazu ist ein geeigneter Wert für die Bahnspannung einzustellen. Optional kann eine Andruckwalze 12 zusätzlich eingesetzt werden (Abb.6), wobei die Anpreßkraft so einzustellen ist, daß bei gegebener Bahnspannung Lufteinschlüsse zuverlässig vermieden werden. Die Bahnspannung kann im Bereich von 1N bis 500N für Bahnbreiten bis 100mm und bis zu 1000N bei ca. 2000mm Bahnbreite eingestellt werden. Grundsätzlich sind auch größere Bahnbreiten einsetzbar, wenn die Länge des Membranelement entsprechend groß ist. Jedoch sollte sich die maximale Bahnbreite an der Länge des Membranelementes orientieren.

Die Windungen der Polymerfolienbahn werden je nach Breite und Dicke mit einer Geschwindigkeit zwischen 0,1 m/min und 300m/min. aufgebracht.

Der Verbund zwischen den einzelnen Lagen der Polymerfolienbahn wird durch Energiezufuhr, bevorzugt durch eine geeignete Wärmebehandlung hergestellt.

Wird die Wärmebehandlung während des Aufwickelns vorgenommen, so ist sie so auszuführen, daß die funktionalisierten Oberflächen einen Verbund zwischen den einzelnen Lagen herstellen, bevorzugt werden die beiden Oberflächen im Überlappungsbereich miteinander verschweißt. Die Erwärmung der Polymerfolienbahn bzw. Umhüllung geschieht beispielsweise durch Heißluft; Flamme, Infrarotstrahlung, Mikrowellen, eine oder mehrere heiße Andruckrollen oder jede andere geeignete Wärmequelle.

Während des Umwickelns des Kerns wird die Polymerfolienbahn so erwärmt, daß der Verbund (Verschweißen) beim Kontakt der einzelnen Lagen sofort hergestellt wird oder soweit erwärmt, daß eine geringe weitere Erwärmung der Hülle zum Verbinden (Verschweißen) der einzelnen Lagen führt. Die Erwärmung ist so durchzuführen, daß noch keine signifikante Veränderung der Stabilität oder des Erscheinungbildes eintritt.

Alternativ läßt sich der. Verbund zwischen den einzelnen Lagen auch während des Aufwickelns durch Ultraschallverschweißung herbeiführen.

Eine weitere Variante den Verbund herzustellen besteht darin, zuerst alle Lagen der Wicklung aufzubringen und die Wärmebehandlung auf das umwickelte Membranelement anzuwenden. Auch hier sind zur Erwärmung Heißluft, Flamme, Infrarotstrahlung, Mikrowellen oder jede andere geeignete Wärmequelle einsetzbar. Die Erwärmung ist so durchzuführen, daß ein Verbund zwischen allen Lagen der Umhüllung durch die funktionalisierten Oberflächen hergestellt wird. Die Temperatur und die Einwirkdauer sind so einzustellen, daß auch die innen liegenden Lagen der Polymerfolienbahn noch miteinander verbunden werden und gleichzeitig die unter Umständen wärmeren Außenlagen (z.B. bei Erwärmung durch Heißluft) noch nicht signifikant in ihrer Stabilität oder in ihrem Erscheinungbild verändert werden. Dies kann durch einfache Versuche ermittelt werden.

Die vorgenannten Verfahren können auch kombiniert werden, so daß unterschiedliche Teile der Hülle nach verschiedenen Verfahren hergestellt werden. Zum Beispiel kann nach dem letztgenannten Verfahren eine dünne Hülle aufgebracht werden, die in einem zweiten Schritt nach dem erstgenannten Verfahren weiter verstärkt wird. Eine umgekehrte Reihenfolge ist ebenso möglich wie auch ersetzen eines Verfahrens durch das zweitgenannte Verfahren. Die Dicken der nach den jeweiligen Verfahren hergestellt Hüllen sind im Bereich zwischen 0,3 mm und 28mm einstellbar.

Umwicklungen nach den vorgenannten Verfahren können auch so vorgenommen werden, daß nicht nur ein- oder mehrlagige Folien eingesetzt werden, sondern auch ein- bzw. mehrlagige Folien gleichzeitig aufgewickelt werden. Dabei können die Folien durchaus verschieden voneinander sein.

Gleiches gilt für ein stufenweises Umwickeln, wo in einem ersten Schritt eine erste Polymerfolie Anwendung findet und in einem oder mehreren nachfolgenden Schritten auch andere Folien Einsatz finden.

Bei allen Verfahrensweisen muß sichergestellt sein, daß die Membran des Membranelements an keiner Stelle der aktiven Oberfläche geschädigt wird.

## Patentansprüche

1. Membranelement, enthaltend einen Membrankern (9) und eine Umhüllung, die den Kern umschließt, wobei die Umhüllung aus sich zumindest teilweise überlappenden Polymerfolien (10) gebildet wird, die im Überlappungsbereich miteinander verschweißt sind.

2. Membranelement nach Anspruch 1, **dadurch gekennzeichnet, daß** die Polymerfolie (10) eine Polypropylenfolie oder Polyesterfolie ist.

3. Membranelement nach Anspruch 1 oder 2, **dadurch gekennzeichnet, daß** die Polymerfolie (10) mindestens eine funktionalisierte Oberfläche aufweist, so dass die Folie unter Energiezufuhr verschweißt werden kann.

4. Membranelement nach Anspruch 1, 2 oder 3, **dadurch gekennzeichnet, daß** die Polymerfolie (10) eine coextrudierte Folie ist.

5. Membranelement nach Anspruch 4, **dadurch gekennzeichnet, daß** die coextrudierte Folie (10) aus einer Basisschicht und mindestens einer Deckschicht besteht, wobei der Schmelzpunkt des Deckschichtpolymers niedriger ist als der Schmelzpunkt des Basischichtpolymers.

6. Membranelement nach Anspruch 5, **dadurch gekennzeichnet, daß** der Schmelzpunkt des Deckschichtpolymers zwischen 70 und 130 °C liegt.

7. Verfahren zur Herstellung eines Membranelements, bei dem ein Membrankern (9) mit einer Umhüllung versehen wird, in dem eine funktionalisierte Polymerfolie (10) um den Membrankern (9) gewickelt wird, wobei sich einzelne Lagen (11) der Polymerfolie (10) zumindest in Teilbereichen überlappen und die Polymerfolie (10) zumindest in diesen Teilbereichen durch Energiezufuhr miteinander verschweißt wird.

8. Verfahren nach Anspruch 7, **dadurch gekennzeichnet, daß** die Polymerfolie (10) als Band schraubenförmig um den Membrankern (9) gewickelt wird, wobei sich die einzelnen Lagen (11a) des Bandes teilweise überlappen.

9. Verfahren nach Anspruch 7, **dadurch gekennzeichnet, daß** die Polymerfolie (10) als Band schraubenförmig um den Membrankern (9) gewickelt wird, wobei die einzelnen Lagen (11b) des Bandes nebeneinander zu liegen kommen, ohne sich zu überlappen und eine erste Schicht bilden und wobei mindestens eine weitere Schicht nebeneinanderliegender Polymerfolienbänder (10) über die erste Schicht gewickelt wird, die dann mit der darunterliegenden Schicht verschweißt wird.

10. Verfahren nach Anspruch 7, **dadurch gekennzeichnet, daß** die Umhüllung eine Dicke von 0,3 bis 28 mm hat.

11. Verfahren nach Anspruch 8 oder 9, **dadurch gekennzeichnet, daß** das Band (10) eine Breite von 10 bis 100 mm hat.

12. Verfahren nach Anspruch 8 oder 9, **dadurch gekennzeichnet, daß** das Band (10) eine Breite von 100 bis 2000 mm hat.

13. Verfahren nach Anspruch 11, **dadurch gekennzeichnet, daß** das Band (10) mit einer Bahnspannung von 1 bis 500N gewickelt wird.

14. Verfahren nach Anspruch 12, **dadurch gekennzeichnet, daß** das Band (10) mit einer Bahnspannung von 100 bis 1000N gewickelt wird.

## Claims

1. A membrane element comprising a membrane core (9) and a sheath which encapsulates the core, where the sheath is formed from polymer films (10) which overlap one another at least to some extent and have been fused to one another in the area of the overlap.

2. A membrane element as claimed in claim 1, wherein the polymer film (10) is a polypropylene film or polyester film.

3. A membrane element as claimed in claim 1 or 2, wherein the polymer film (10) has at least one functionalized surface with the result that the film can be fused with the supply of energy.

4. A membrane element as claimed in claim 1, 2 or 3, wherein the polymer film (10) is a coextruded film.

5. A membrane element as claimed in claim 4, wherein the coextruded film (10) is composed of a base layer and of at least one outer layer, where the melting point of the outer layer polymer is lower than that of the base layer polymer.

6. A membrane element as claimed in claim 5, wherein the melting point of the outer layer polymer is from 70 to 130°C.

7. A process for producing a membrane element, in which a membrane core (9) is provided with a sheath by winding a functionalized polymer film (10) around the membrane core (9), where individual laps (11) of the polymer film (10) overlap one another, at least in some areas, and energy is supplied to fuse the polymer film (10) at least in these areas.

8. The process as claimed in claim 7, wherein the polymer film (10) is wound as a layer spirally around the membrane core (9), where the individual laps (11a) of the layer overlap to some extent.

9. The process as claimed in claim 7, wherein the polymer film (10) is wound as a layer spirally around the membrane core (9), where the individual laps (11b) of the layer are laid alongside one another, without overlapping each other, and form a first layer, and where at least one further layer of polymer film layers (10) lying alongside one another is wound over the first layer, and this is then fused to the layer lying thereunder.

10. The process as claimed in claim 7, wherein the thickness of the sheath is from 0.3 to 28 mm.

11. The process as claimed in claim 8 or 9, wherein the width of the layer (10) is from 10 to 100 mm.

12. The process as claimed in claim 8 or 9, wherein the width of the layer (10) is from 100 to 2000 mm.

13. The process as claimed in claim 11, wherein the layer (10) is wound with a web tension of from 1 to 500 N.

14. The process as claimed in claim 12, wherein the layer (10) is wound with a web tension of from 100 to 1000 N.

## Revendications

1. Elément de membrane, contenant un noyau de membrane (9) et une enveloppe, qui entoure le noyau, l'enveloppe étant formée par des feuilles polymères (10) qui se chevauchent au moins partiellement et sont soudées entre elles dans la zone de chevauchement.

2. Elément de membrane selon la revendication 1, **caractérisé en ce que** la feuille polymère (10) est une feuille de polypropylène ou une feuille de polyester.

3. Elément de membrane selon la revendication 1 ou 2, **caractérisé en ce que** la feuille polymère (10) possède au moins une surface fonctionnalisée de sorte que la feuille peut être soudée moyennant un apport d'énergie.

4. Elément de membrane selon la revendication 1, 2 ou 3, **caractérisé en ce que** la feuille polymère (10) est une feuille coextrudée.

5. Elément de membrane selon la revendication 4, **caractérisé en ce que** la feuille coextrudée (10) est constituée par une couche de base et au moins une couche de revêtement, le point de fusion du polymère de la couche de revêtement étant inférieur au point de fusion du polymère de la couche de base.

6. Elément de membrane selon la revendication 5, **caractérisé en ce que** le point de fusion du polymère de la couche de revêtement est compris entre 70 et 130°C.

7. Procédé pour fabriquer un élément de membrane, selon lequel un noyau de membrane (9) est pourvu d'une enveloppe, dans laquelle une feuille polymère fonctionnalisée (10) est enroulée autour du noyau (9) de la membrane, des couches individuelles (11) de la feuille polymère (10) se chevauchant au moins dans des zones partielles, et la feuille polymère (10) étant soudée à elle-même au moins dans ces zones partielles, par apport d'énergie.

8. Procédé selon la revendication 7, **caractérisé en ce que** la feuille polymère (10) est enroulée sous la forme d'une bande selon une disposition hélicoïdale autour du noyau (9) de la membrane, les couches individuelles (11a) de la bande se chevauchant partiellement.

9. Procédé selon la revendication 7, **caractérisé en ce que** la feuille polymère (10) est enroulée sous la forme d'une bande selon une disposition hélicoïdale autour du noyau (9) de la membrane, les couches individuelles (11b) de la bande venant s'appliquer côte-à-côte sans se chevaucher et formant une première couche, et au moins une autre couche de bandes (10) de feuille polymère disposées côte-à-côte étant enroulée au-dessus de la première couche, cette autre couche étant alors soudée à la couche sous-jacente.

10. Procédé selon la revendication 7, **caractérisé en ce que** l'enveloppe possède une épaisseur de 0, 3 à 28 mm.

11. Procédé selon la revendication 8 ou 9, **caractérisé en ce que** la bande (10) possède une largeur de 10 à 100 mm.

12. Procédé selon la revendication 8 ou 9, **caractérisé en ce que** la bande (10) possède une largeur de 10 à 2000 mm.

13. Procédé selon la revendication 11, **caractérisé en ce que** la bande (10) est enroulée avec une tension de bande de 1 à 500N.

14. Procédé selon la revendication 12, **caractérisé en ce que** la bande (10) est enroulée avec une tension de bande de 100 à 1000N.
